# EUROPÄISCHE PATENTSCHRIFT

(11) **EP 2 758 678 B1**
(45) Veröffentlichungstag und Bekanntmachung des Hinweises auf die Patenterteilung: **01.03.2017**
(21) Anmeldenummer: 12766046.2
(22) Anmeldetag: 20.09.2012
(51) Int. Cl.: F16C 9/04, F16C 33/10

(54) **PLEUEL**
CONNECTING ROD
BIELLE

(30) Priorität: 21.09.2011 DE 102011083134
(43) Veröffentlichungstag der Anmeldung: 30.07.2014
(73) Patentinhaber: Mahle International GmbH, 70376 Stuttgart (DE)
(72) Erfinder: LOCHMANN, Roland, 71672 Marbach (DE)
(74) Vertreter: BRP Renaud & Partner mbB Rechtsanwälte Patentanwälte Steuerberater
(86) Internationale Anmeldenummer: PCT/EP2012/068544
(87) Internationale Veröffentlichungsnummer: WO 2013/041626

(56) Entgegenhaltungen:
- WO-A1-2005/015020
- DE-A1-102008 008 584
- GB-A- 731 435
- JP-A- 6 173 937
- US-A- 2 399 889

## Beschreibung

Die vorliegende Erfindung betrifft ein Pleuel zur Umwandlung einer linearen Bewegung eines Kolbens in eine drehende Bewegung einer Kurbelwelle gemäß dem Oberbegriff des Anspruchs 1. Die Erfindung betrifft außerdem eine Brennkraftmaschine mit zumindest einem derartigen Pleuel.

Aus der US 2009/0126191 A1 ist ein gattungsgemäßer Pleuel zur Umwandlung einer linearen Bewegung eines Kolbens in einem drehende Bewegung einer Kurbelwelle bekannt, wobei der bekannte Pleuel über ein kleines Pleuelauge drehbar mit einem Bolzen des Kolbens und über ein großes Pleuelauge drehbar mit der Kurbelwelle verbunden ist. Dabei sind in einer im kleinen Pleuelauge eingebrachten Lagerbuchse nicht umlaufende Rillen angeordnet, die eine Gratbildung an Lagerkanten vermeiden sollen.

Die vorliegende Erfindung beschäftigt sich mit dem Problem, für einen Pleuel der gattungsgemäßen Art eine verbesserte oder zumindest eine alternative Ausführungsform anzugeben, die sich insbesondere durch verbesserte Laufeigenschaften auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, zumindest an einem kleinen Pleuelauge eines Pleuels, über welches dieser mit einem Bolzen eines Kolbens drehbar verbunden ist, zumindest eine exzentrische Schmierrille vorzusehen, deren Achse geneigt zur Achse des kleinen Pleuelauges ist.

"Geneigt" kann dabei bedeuten, dass die Achse der Schmierrille um eine Vertikale und/oder eine Horizontale geneigt zur Achse des jeweiligen Pleuelauges verläuft, das heißt insbesondere nur in eine Ebene schräg verläuft, in der anderen Ebene aber parallel zur Achse ist. Mit der erfindungsgemäß vorgesehenen Schmierrille kann eine besonders effektive Schmierung des Bolzens im kleinen Pleuelauge erfolgen, wodurch die hier zwangsläufige auftretende Reibung reduziert und die Laufeigenschaften verbessert werden können. Die zumindest eine Schmierrille kann dabei direkt im Pleuelauge oder in einer dort angeordneten Lagerbuchse vorgesehen werden. Zur Herstellung der zumindest einen exzentrischen und geneigten Schmierrille kann eine herkömmliche Drehmaschine mit einem drehbar gelagerten Drehmeißel verwendet werden, dessen für die vorliegende Aufgabe geeignete Schneidefläche radial außen angeordnet ist. Zur Herstellung der erfindungsgemäßen Schmierrille wird dabei zunächst der Drehmeißel derart in dem kleinen Pleuelauge angeordnet, dass dessen Drehachse auf der Achse des kleinen Pleuelauges liegt. Der Drehmeißel kann nun in Drehung versetzt werden, wobei die radiale Abmessung des Drehmeißels derart ist, dass dabei kein Kontakt zur Innenwand des kleinen Pleuelauges oder einer darin angeordneten Lagerbuchse stattfindet. Anschließend wird die Drehachse des Drehmeißels zur Achse des kleinen Pleuelauges geneigt und zugleich in orthogonaler Richtung zur Achse des kleinen Pleuelauges ausgelenkt, so dass die Richtung der Drehachse des Drehmeißels schräg zur Richtung der Achse des kleinen Pleuelauges verläuft. Die Ausrichtung der Drehachse des Drehmeißels ist so gewählt, dass die zumindest eine Schmierrille auf einer Lastseite des Pleuelauges unterbrochen ist. Zugleich kann die zumindest eine Schmierrille über den Äquator und den Zenit des Pleuelauges verlaufen. Mit der erfindungsgemäß vorgesehenen Schmierrille im kleinen Pleuelauge des Pleuels kann die Schmierung in diesem Bereich deutlich verbessert und damit die Reibung deutlich reduziert werden. Generell kann in gleicher Weise eine solche Schmierrille auch im großen Pleuelauge oder einer dort vorgesehenen Lagerbuchse angeordnet werden. Das große Pleuelauge ist dabei üblicherweise als "gecracktes" Pleuelauge ausgebildet.

Bei einer vorteilhaften Weiterbildung der erfindungsgemäßen Lösung weist die zumindest eine Schmierrille einen ausgerundeten Nutengrund auf. Derart ausgerundete Geometrien reduzieren allgemein die Kerbwirkung und machen aus diesem Grund den Pleuel verschleißbeständiger. Durch die gewählte Exzentrizität der zumindest einen Schmierrille wird zudem bewirkt, dass diese sehr sanft ausläuft, wodurch ein Öldruckaufbau wenig gestört und eine Ölansaugung aus der Schmierrille unterstützt wird.

Bei einer vorteilhaften Weiterbildung der erfindungsgemäßen Lösung tritt zumindest eine Schmierrille an einer Axialseite des Pleuelauges aus. Durch dieses Austreten der zumindest einen Schmierrille wird ein Ölfluss innerhalb der Schmierrille begünstigt und dadurch die Schmierwirkung verbessert. Sämtlichen Ausführungsformen ist dabei gemein, dass die Schmierung durch die gewählte Anordnung und den gewählten Verlauf der zumindest einen Schmierrille begünstigt und damit die Leichtlaufeigenschaften eines mit einem derartigen Pleuel ausgestatteten Verbrennungsmotors verbessert werden können.

Zweckmäßig ist zumindest eine Zulaufbohrung zur Versorgung der wenigstens einen Schmierrille mit Schmierstoff vorgesehen. Durch eine derartige Zulaufbohrung ist eine optimale Versorgung der Schmierrille mit Schmierstoff, beispielsweise mit Öl möglich, wodurch die Reibung reduziert und die Leichtlaufeigenschaften gesteigert werden können.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: ein erfindungsgemäßer Pleuel mit einem daran angebundenen Kolben,
- Fig. 2: eine geometrische Darstellung der Exzentrizität der exzentrischen Schmierrille,
- Fig. 3a: ein kleines Pleuelauge mit einer darin angeordneten Lagerbuchse und exzentrische bischräg und offen zur Axialseite hin verlaufender Schmierrille,
- Fig. 3b: eine Darstellung wie in Fig. 3a, jedoch bei exzentrisch, helix und zur Axialseite hin offener Schmierrille,
- Fig. 3c: eine Darstellung wie in Fig. 3b, jedoch mit einer exzentrisch, helix, geschlossen und zur Axialseite hin offenen Schmierrille,
- Fig. 4: eine weitere Darstellung einer möglichen Ausführungsform der Schmierrille ohne zusätzliche Lagerbuchse,
- Fig. 5: eine Darstellung wie in Fig. 4, jedoch mit einer Zulaufbohrung für Schmierstoff.

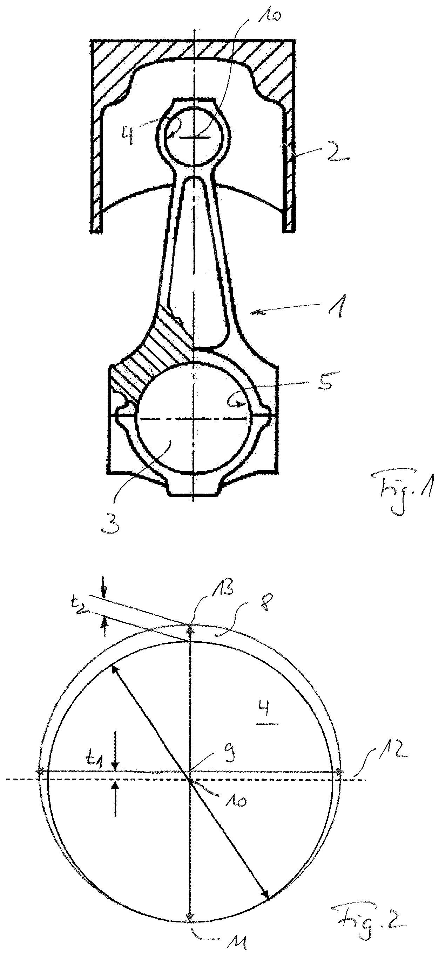

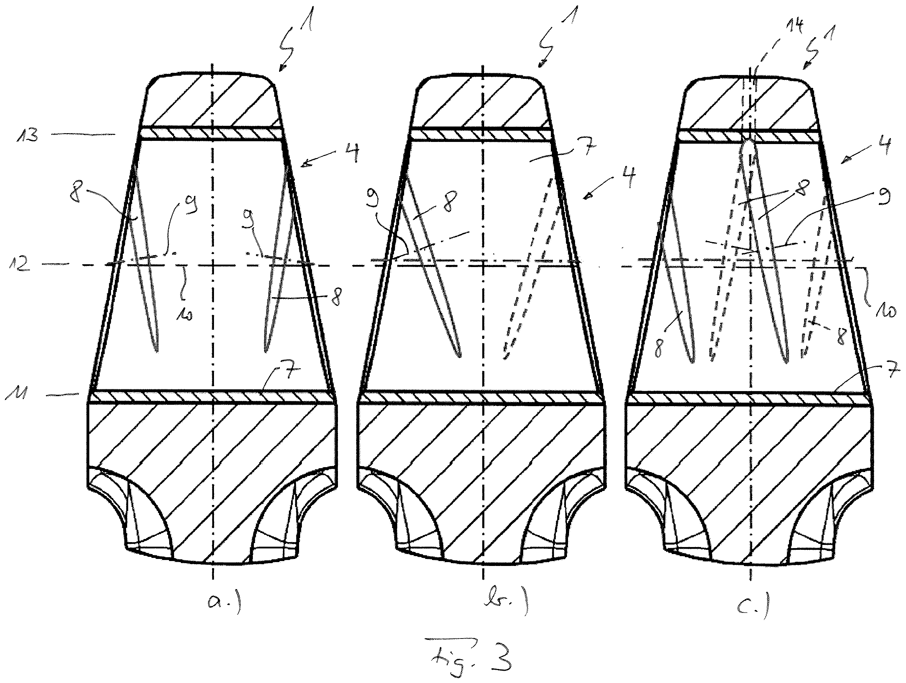

Entsprechend der Fig. 1, weist ein erfindungsgemäßer Pleuel 1, der üblicherweise auch als Pleuel- oder Schubstange bezeichnet wird, zur Umwandlung einer linearen Bewegung eines Kolbens 2 in eine drehende Bewegung einer Kurbelwelle 3 zwei Pleuelaugen 4, 5 auf. Das Pleuelauge 4 wird dabei als kleines Pleuelauge 4 bezeichnet und verbindet den Pleuel 1 drehbar mit einem Bolzen des Kolbens 2, wogegen das Pleuelauge 5 als großes Pleuelauge 5 bezeichnet wird und über dieses drehbar mit der Kurbelwelle 3 verbunden ist. Das kleine Pleuelauge 4 ist dabei geschlossen bzw. als geschlossenes Lager ausgebildet, wogegen das große Pleuelauge 5 als geteiltes Lager (Gesägt oder gecrackt) ausgebildet ist. Erfindungsgemäß ist nun zumindest an einer Innenfläche des kleinen Pleuelauges 4 oder einer darin angeordneten Lagerbuchse 7 (vgl. Fig. 3 bis 5) zumindest eine exzentrische Schmierrille 8 vorgesehen, deren Achse 9 geneigt zur Achse 10 des kleinen Pleuelauges 4 ist. "Geneigt" kann dabei bedeuten, dass die Achse 9 um eine Vertikale und/oder eine Horizontale geneigt zur Achse 10 des jeweiligen Pleuelauges 4,5 ist, das heißt insbesondere nur in eine Ebene schräg verläuft, in der anderen Ebene aber parallel zur Achse 10. Die Achse 10 des kleinen Pleuelauges 4 verläuft gemäß der Fig. 1 senkrecht zur Bildebene. Selbstverständlich kann in gleicher Weise eine derartige Schmierrille 8 auch in einer Lagerbuchse 7 im großen Pleuelauge 5 oder direkt im großen Pleuelauge 5 angeordnet sein.

Die zumindest eine Schmierrille 8 kann dabei einen ausgerundeten Nutengrund aufweisen, wie dies beispielsweise gemäß der Fig. 3c ersichtlich ist. Derartige ausgerundete Geometrien reduzieren insbesondere die die Versagensanfälligkeit beeinflussende Kerbwirkung. Betrachtet man die Fig. 3a bis 3c weiter, so kann man erkennen, dass die Schmierrille 8 auf einer Lastseite 11, das heißt auf dem Nadir (Fußpunkt) unterbrochen ist und sich lediglich über den Äquator 12 und den Zenit 13 (vgl. Fig. 3c) erstreckt. Dabei deckt die zumindest eine Schmierrille 8 einen Umfangswinkel von mehr als 180° ab, vorzugsweise einen Winkel von 240 bis 300°. Durch die exzentrische Anordnung der Schmierrille 8 kann insbesondere die Ölversorgung im hochbelasteten Teil deutlich verbessert und dadurch die Reibung deutlich reduziert werden. Die Schmierrillen 8 weisen dabei eine Tiefe von ca. 1 bis 100 µm auf und können dadurch mit Vorteil gegenüber Öltaschen und Slots hergestellt werden. Durch die exzentrische Anordnung der Schmierrillen 8 kann auch ein sehr sanfter Nutauslauf erzielt werden, durch welchen der Öldruckaufbau wenig gestört und zugleich die Ölansaugung aus der Schmierrille 8 unterstützt wird.

Die Herstellung der zumindest einen Schmierrille 8 kann dabei mittels einer herkömmlichen Drehmaschine mit einem drehbar gelagerten Drehmeißel bewerkstelligt werden, dessen für die vorliegende Aufgabe geeignete Schneidefläche radial außen angeordnet ist. Zur Herstellung der zumindest einen Schmierrille 8 wird der Drehmeißel zunächst derart im kleinen Pleuelauge 4 angeordnet, dass dessen Drehachse auf der Achse 10 des kleinen Pleuelauges 4 liegt. Der Drehmeißel wird nun in Drehung versetzt, wobei die radiale Abmessung des Drehmeißels derart gewählt ist, dass dabei kein Kontakt zur Innenwand des Pleuelauges 4 bzw. zur Innenwand der im Pleuelauge 4 angeordneten Lagerbuchse 7 stattfindet. Anschließend wird die Drehachse des Drehmeißels in die Richtung verschoben, in der die Schmierrille 8 vorgesehen ist. Diese Richtung verläuft schräg zur Achse 10, wodurch die Schmierrille 8 über den Äquator 12 zum Zenit 13 hier an Tiefe zunimmt und auf der gegenüberliegenden Seite vom Zenit 13 hin zum Äquator 12 wieder an Tiefe verliert. Auf der Lastseite 11, das heißt dem Nadir 11, ist die Schmierrille 8 überhaupt nicht vorhanden, da sie bereits zwischen dem Äquator 12 und dem Nadir 11 ausläuft. Betrachtet man dabei die Fig. 2, so kann man erkennen, dass die Schmierrille 8 im Zenit 13 eine Tiefe t₂ aufweist, die doppelt so groß ist wie die vertikale Achsverschiebung t₁ am Äquator 12. Dabei nimmt die Tiefe der Schmierrille 8 leicht oberhalb der Lastseite, das heißt leicht oberhalb des Nadirs 11 über den Äquator 12 bis zum Zenit 13 hin zu und läuft auf der gegenüberliegenden Seite wieder über den Äquator 12 zum Nadir 11 sanft aus. Der Winkel der Exzentrizität der Schmierrille 8 kann dabei an die Richtung der Hauptlast angepasst sein, woraus sich als Vorteil ein nicht unterbrochener Schmierfilmaufbau im hochbelasteten Bereich des Lagers ergibt und der maximal mögliche Tragbereiche der Bohrungsfläche bzw. der Lagerbuchse 7 genutzt wird. Durch exzentrische Mehrfachrillen bzw. mehrere exzentrische Schmierrillen 8, auch mit verschiedener Rillentiefe, kann die Ölversorgung im hochbelasteten Bereich weiter verbessert werden. Exzentrische Schmierrillen 8 mit geringer Tiefe von ca. 1 bis 100 µm können mit Vorteil gegenüber Öltaschen und Slots hergestellt werden. Ein Umfangswinkel über welchen sich die Schmierrille 8 erstreckt beträgt üblicherweise 180 bis 360°, typischerweise 240 bis 300°. Durch den sehr sanften Nutauslauf im Bereich zwischen dem Äquator 12 und dem Nadir 11 wird der Schmierdruckaufbau wenig gestört und die Ölansaugung aus der Schmierrille zusätzlich unterstützt.

Durch den schrägen Verlauf der Achse 9 der Schmierrille 8 zur Achse 10 des kleinen Pleuelauges 4 ist die Schmierrille, wie dies gemäß den Fig. 3a bis 3c zu erkennen ist, zu einer Axialseite des Pleuelauges 4 hin geöffnet und bewirkt dadurch eine selbstansaugende Ölversorgung.

Gemäß der Fig. 3a verläuft dabei die Schmierrille 8 exzentrisch, bischräg und zur Axialseite des Pleuelauges 4 hin offen, wogegen die Schmierrille 8 gemäß der Fig. 3b exzentrisch, helix und zur Axialseite des kleinen Pleuelauges 4 hin offen verläuft. Demgegenüber ist die Schmierrille 8 gemäß der Fig. 3c exzentrisch, helix, geschlossen und zugleich zur Axialseite hin offen. Das kleine Pleuelauge 4 weist gemäß den Fig. 3a bis 3c einen trapezförmigen Querschnitt auf, wobei dies rein optional vorgesehen ist. Unter "helix" versteht man dabei eine Achse 9 der Schmierrillen 8, die parallel zur Achse 10 des kleinen Pleuelauges 4 bzw. zur Achse 10 der Lagerbuchse 7 verläuft. Generell kann selbstverständlich auch eine spiralförmig verlaufende Schmierrille 8 vorgesehen sein, wie dies gemäß der Fig. 3c angedeutet ist.

Mit der erfindungsgemäßen exzentrisch angeordneten und schräg zur Achse 10 des Pleuelauges 4 verlaufenden Schmierrille 8 kann die Schmierwirkung im kleinen Pleuelauge 4 bzw. in einer dort angeordneten Lagerbuchse 7 deutlich verbessert werden, wodurch die Reibung in diesem Bereich reduziert und die Leichtlaufeigenschaften des Verbrennungsmotors verbessert werden können.

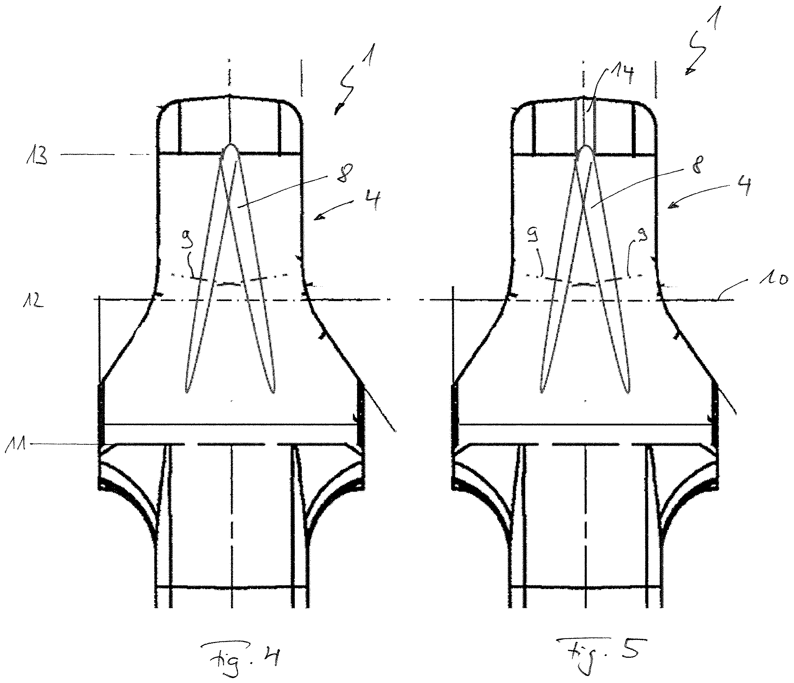

Gemäß den Fig. 4 und 5 ist eine weitere Ausführungsform einer möglichen Schmierrille 8 gezeigt, die in diesem Fall eine exzentrische und bi-schräge Ausbildung aufweist. Eine Lagerbuchse 7 ist dabei nicht vorgesehen, so dass die Schmierrillen(n) 8 direkt im Pleuelauge 4 eingebracht sind. Die Schmierrille 8 gemäß der Fig. 5 weist dabei eine Zulaufbohrung 14 auf, über welche eine Schmiermittelzuführung möglich ist. Dem gegenüber ist die Schmierrille 8 gemäß der Fig. 4 als geschlossene Schmierrille 8 ausgebildet. Eine derartige Zulaufbohrung 14 kann selbstverständlich auch bei anderen Schmierrillengeometrien vorgesehen sein, weshalb eine solche Zulaufbohrung 14 mit unterbrochen gezeichneter Linie zusätzlich in Fig. 3c eingezeichnet ist. In diesem Fall muss die Zulaufbohrung 14 selbstverständlich auch die Lagerbuchse 7 durchdringen.

Selbstverständlich sind dabei die zuvor ausschließlich für das kleine Pleuelauge 4 gemachten Aussagen auch auf das große Pleuelauge 5 übertragbar, wobei dieses im Vergleich zum kleinen Pleuelauge 4 üblicherweise nicht als geschlossenes Lager, sondern als geteiltes Lager mit zwei Lagerhälften ausgeführt ist. Sämtliche in der Beschreibung und in den Ansprüchen gemachten Ausführungen der Schmierrille 8 bezüglich des kleinen Pleuelauges 4 können somit unverändert auf das große Pleuelauge 5 übertragen werden. Auch kann die Form insbesondere des kleinen Pleuelauges 4 von der gezeigten Trapezform (vgl. Fig. 3a-c) abweichen und beispielsweise eine zylindrische oder eine gestufte Form aufweisen.

## Patentansprüche

1. Pleuel (1) zur Umwandlung einer linearen Bewegung eines Kolbens (2) in eine drehende Bewegung einer Kurbelwelle (3), wobei der Pleuel (1) über ein kleines Pleuelauge (4) drehbar mit einem Bolzen des Kolbens (2) und über ein großes Pleuelauge (5) drehbar mit der Kurbelwelle (3) verbindbar ist,
wobei das kleine Pleuelauge (4) und ggf. eine darin angeordnete Lagerbuchse (7) einen sich verjüngenden, insbesondere einen trapezförmigen oder einen gestuften Längsschnitt aufweist, **dadurch gekennzeichnet,**
- **dass** an einer Innenfläche des großen Pleuelauges (5) und/oder des kleinen Pleuelauges (4) oder der dort angeordneten Lagerbuchse (7) zumindest eine exzentrische Schmierrille (8) vorgesehen ist, deren Achse (9) geneigt zur Achse (10) des jeweiligen Pleuelauges (4,5) ist, wobei die Tiefe der Schmierrille (8) oberhalb einer Lastseite (11), das heißt leicht oberhalb des Nadirs (11) über den Äquator (12) bis zum Zenit (13) hin zunimmt und auf der gegenüberliegenden Seite wieder über den Äquator (12) zum Nadir (11) ausläuft,
- **dass** die Schmierrille (8) auf der Lastseite (11) des Pleuelauges (4) unterbrochen ist,
- **dass** die zumindest eine Schmierrille (8) einen Umfangswinkel von > 180° abdeckt.

2. Pleuel nach Anspruch 1, **dadurch gekennzeichnet,**
- **dass** die zumindest eine Schmierrille (8) einen ausgerundeten Nutengrund aufweist, und/oder
- **dass** die Achse (9) um eine Vertikale und/oder eine Horizontale geneigt zur Achse (10) des jeweiligen Pleuelauges (4,5) ist.

3. Pleuel nach Anspruch 1 oder 2,
**dadurch gekennzeichnet,**
- **dass** zumindest eine Schmierrille (8) an einer Axialseite des Pleuelauges (4,5) austritt, und/oder
- **dass** zumindest eine Zulaufbohrung zur Versorgung der wenigstens einen Schmierrille (8) mit Schmierstoff vorgesehen ist.

4. Pleuel nach einem der Ansprüche 1 bis 3,
**dadurch gekennzeichnet,**
**dass** mehrere Schmierrillen (8) vorgesehen sind.

5. Pleuel nach einem der Ansprüche 1 bis 4,
**dadurch gekennzeichnet,**
**dass** im Pleuelauge (4,5) folgende Schmierrillenformen vorgesehen sind,
- exzentrisch, bischräg und zur Axialseite hin offen, oder
- exzentrisch, helix und zur Axialseite hin offen, oder
- exzentrisch, helix, geschlossen und zur Axialseite hin offen.

6. Verbrennungsmotor, insbesondere in einem Kraftfahrzeug, mit zumindest einem Pleuel (1) nach einem der vorhergehenden Ansprüche.

## Claims

1. Connecting rod (1) for converting a linear motion of a piston (2) into a rotating motion of a crankshaft (3), whereby the connecting rod (1) is rotatably connectable with a pin of the piston (2) via a small connecting rod eye (4) and with the crankshaft (3) via a large connecting rod eye (5), whereby the small connecting rod eye (4) and, if applicable, a bearing bush (7) arranged therein, has a tapering longitudinal section, in particular a trapezoidal or a stepped longitudinal section, **characterized in that**
- at an inner surface of the large connecting rod eye (5) and/or of the small connecting rod eye (4) or of the bearing bush (7) arranged therein, there is provided at least one eccentric lubricating groove (8), the axis (9) of which is inclined to the axis (10) of the respective connecting rod eye (4,5), whereby the depth of the lubricating groove (8) increases above a load surface (11), that is slightly above the nadir (11) over the equator (12) up to the zenith (13), and runs out again on the opposite side over the equator (12) to the nadir (11),
- the lubricating groove (8) is interrupted on the load surface (11) of the connecting rod eye (4),
- the at least one lubricating groove (8) covers a circumferential angle of > 180°.

2. Connecting rod according to claim 1,
**characterized in that**,
- the at least one lubricating groove (8) has a rounded groove base, and/or
- the axis (9) is inclined to the axis (10) of the respective connecting rod eye (4,5) about a vertical line and/or a horizontal line.

3. Connecting rod according to claim 1 or 2,
**characterized in that**,
- at least one lubricating groove (8) exits at an axial side of the connecting rod eye (4,5), and/or
- there is provided at least one inlet bore for supplying the at least one lubricating groove (8) with lubricant.

4. Connecting rod according to one of the claims 1 to 3,
**characterized in that**,
multiple lubricating grooves (8) are provided.

5. Connecting rod according to one of the claims 1 to 4,
**characterized in that**,
the following lubricating groove shapes are provided in the connecting rod eye (4,5),
- eccentric, bi-diagonal and open towards the axial side, or
- eccentric, helical and open towards the axial side, or
- eccentric, helical, closed and open towards the axial side.

6. Internal combustion engine, in particular in a vehicle, with at least one connecting rod (1) according to one of the preceding claims.

## Revendications

1. Bielle (1) destinée à convertir un mouvement linéaire d'un piston (2) en un mouvement rotatif d'un vilebrequin (3), dans laquelle la bielle (1) est raccordée via une petite tête de bielle (4) à rotation avec un boulon du piston (2) et via une grande tête de bielle (5) à rotation avec le vilebrequin (3), dans laquelle la petite tête de bielle (4) et éventuellement un coussinet (7) qui y est agencé présentent une section longitudinale décroissante de forme trapézoïdale ou étagée, **caractérisée en ce que** :
- il est prévu sur une face interne de la grande tête de bielle (5) et/ou de la petite tête de bielle (4) ou du coussinet (7) qui y est agencé au moins une rainure de graissage excentrique (8), dont l'axe (9) est incliné par rapport à l'axe (10) de la tête de bielle respective (4, 5), dans laquelle la profondeur de la rainure de graissage (8) s'étend au-dessus d'un côté de charge (11), c'est-à-dire qu'elle augmente légèrement au-dessus du nadir (11) sur l'équateur (12) jusqu'au zénith (13) et s'écoule du côté opposé sur l'équateur (12) à nouveau jusqu'au nadir (11),
- la rainure de graissage (8) est interrompue du côté de charge (11) de la tête de bielle (4),
- la au moins une rainure de graissage (8) couvre un angle périphérique supérieur à 180°.

2. Bielle selon la revendication 1,
**caractérisée en ce que** :
- la au moins une rainure de graissage (8) présente une base de rainure arrondie et/ou
- l'axe (9) est incliné autour d'une ligne verticale et/ou d'une ligne horizontale par rapport à l'axe (10) de la tête de bielle respective (4, 5).

3. Bielle selon la revendication 1 ou 2,
**caractérisée en ce que** :
- au moins une rainure de graissage (8) sort sur d'un côté axial de la tête de bielle (4, 5) et/ou
- au moins un orifice d'admission est prévu pour alimenter en lubrifiant au moins une rainure de graissage (8).

4. Bielle selon l'une quelconque des revendications 1 à 3,
**caractérisée en ce que** :
plusieurs rainures de graissage (8) sont prévues.

5. Bielle selon l'une quelconque des revendications 1 à 4,
**caractérisée en ce que** :
les formes de rainures de graissage suivantes sont prévues dans la tête de bielle (4, 5) :
- excentrique, bi-chanfreinée et ouverte du côté axial, ou
- excentrique, en hélice, ouverte vers du côté axial ou
- excentrique, en hélice, fermée et ouverte du côté axial.

6. Moteur à combustion, en particulier dans un véhicule automobile, avec au moins une bielle (1) selon l'une quelconque des revendications précédentes.
